# EUROPÄISCHE PATENTANMELDUNG

(11) **EP 1 376 282 A2**
(43) Veröffentlichungstag der Anmeldung: **02.01.2004**
(21) Anmeldenummer: 03013752.5
(22) Anmeldetag: 17.06.2003
(51) Int. Cl.: G05B 19/418

(54) **Steuersystem mit Aktuatorüberwachung**

(30) Priorität: 17.06.2002 DE 10226977
(71) Anmelder: SIEMENS AKTIENGESELLSCHAFT, 80333 München (DE)
(72) Erfinder: Maier, Willi, 77728 Oppenau (DE)

(57) **Zusammenfassung**

Die Erfindung bezieht sich auf ein Steuersystem (1) mit einer Zentraleinheit (2) und wenigstens einer Aktuatorsteuereinheit (E_{N}), die zwischen die Zentraleinheit (2) des Steuersystems (1) und wenigstens einen zu steuernden Aktuator (A_{N}) geschaltet ist, wobei die Aktuatorsteuereinheit (E_{N}) einen Steuerschalter (12) zum Ansteuern des Aktuators (A_{N}) umfasst. Weiter bezieht sich die Erfindung auf eine Aktuatorsteuereinheit (E_{N}) und ein Verfahren zur Erzeugung eines verschleißabhängigen Signals eines Aktuators (A_{N}). Um Ausfall oder Verschleißerscheinungen bei Aktuatoren (A_{N}) zu erkennen wird vorgeschlagen, in einer Aktuatorsteuereinheit (E_{N}) einen Prozessor (10) und eine Überwachungseinheit (11) anzuordnen. Der Prozessor (10) steuert die Kommunikation zwischen der Zentraleinheit (2) und der Aktuatorsteuereinheit (E_{N}), insbesondere den Schaltvorgang auf Befehl der Zentraleinheit (2). Die Überwachungseinheit (11) erfasst die während des Schaltvorgangs über den Steuerschalter (12) abfallende Spannung (U) bzw. fließenden Strom (I) und führt diese dem Prozessor (10) zu, in dem ein Vergleich mit gespeicherten Referenzen (Iₛ(t), Uₛ(t)) vorgenommen wird und bei Abweichungen ein Signal erzeugt wird, welches der Zentraleinheit zugeführt wird. Das Steuersystem ist durch die dezentrale Verwendung von Prozessoren und Überwachungseinheiten in den Aktuatoreinheiten in der Lage, unabhängig vom verwendeten Aktuatortyp eine Überwachung auf Verschleiß oder Ausfall des Aktuators vorzunehmen, indem es sich an den Aktuatortyp zu festlegbaren Zeitpunkten oder -räumen anpasst und somit auf effektive Art und Weise ein Austauschen von Aktuatoren ermöglicht.

## Beschreibung

Die Erfindung bezieht sich auf ein Steuersystem mit einer Zentraleinheit und wenigstens einer Aktuatorsteuereinheit, die zwischen die Zentraleinheit des Steuersystems und wenigstens einen zu steuernden Aktuator geschaltet ist, wobei die Aktuatorsteuereinheit einen Steuerschalter zum Ansteuern des Aktuators umfasst. Weiter bezieht sich die Erfindung auf eine Aktuatorsteuereinheit und ein Verfahren zur Erzeugung eines verschleißabhängigen Signals eines Aktuators.

In Steuersystemen, beispielsweise in speicherprogrammierbaren Steuerungen, werden unterschiedliche elektromechanische Aktuatoren eingesetzt, um beispielsweise hohe Ströme oder Spannungen zu schalten. Es können aber auch nichtelektrische Größen, beispielsweise Druck, über ein Ventil gesteuert werden. Dabei wird der Aktuator über einen Steuerschalter ein- bzw. ausgeschaltet. Dieser Steuerschalter wird mittels einer niedrigen Spannung geschaltet. Als Aktuatoren sind beispielsweise Schütze oder Ventile bekannt. Diese werden beispielsweise in speicherprogrammierbaren Steuerungen zur Steuerung von Prozessen eingesetzt.

Aufgrund des elektromechanischen Aufbaus neigen diese Aktuatoren zum mechanischen Verschleiß, der zu einer Verschlechterung der Schaltzuverlässigkeit oder sogar zum Totalausfall führen kann. Dieser Verschleiß stellt sich normalerweise erst nach einer Ableistung einer Vielzahl von Schaltvorgängen ein, er kann aber auch schon nach einer geringen Anzahl von Schaltvorgängen eintreten. Der Ausfall eines Aktuators kann zu einer Beeinträchtigung oder Störung im Ablauf des Prozesses führen. Deshalb müssen die Aktuatoren regelmäßig überwacht werden, wozu entweder aufwendige Überwachungsschaltungstechnik oder ein manuelles und zeitaufwendiges Kontrollieren notwendig ist.

Bisher wurde diesem Problem dadurch begegnet, dass nach einer vorgeschriebenen Schalthäufigkeit der Aktuator unabhängig von seinem Zustand ausgewechselt wurde. Dies hatte zur Folge, dass auch Aktuatoren gewechselt wurden, die einen sehr guten Zustand aufwiesen. Es war ein Eingreifen von Personal erforderlich, welches turnusmäßig alle Aktuatoren ausgewechselt hat. Durch diese Vorgehensweise werden jedoch keine vorzeitigen Totalausfälle verhindert. Ein derartiger unplanmäßiger Totalausfall kann für den Betreiber des Prozesses sehr teuer werden, da beispielsweise in chemischen Prozessen sehr viel Zeit verloren geht oder auch ein im Prozess befindliches Stoffgemisch unbrauchbar wird. Außerdem werden intakte Aktuatoren kontrolliert und gegebenenfalls ausgetauscht, die ohne weiteres ihre Schaltfunktion erfüllen.

In der DE 197 23 563 wird ein Verfahren zur Funktionsüberwachung eines elektromagnetischen Aktuators mit wenigstens einem Elektromagneten beschrieben, der auf einen gegen die Kraft wenigstens einer Rückstellfeder bewegbaren Anker zur Betätigung eines Stellgliedes einwirkt, insbesondere eines elektromagnetischen Aktuators zur Betätigung eines Gaswechselventils an einem Zylinder einer Kolbenbrennkraftmaschine, bei dem die elektrische Leistung des Magneten über eine elektrische Steuerung gesteuert wird und bei dem der jeweils vom gesteuerten elektrischen Leistungsparameter abhängige andere elektrische Leistungsparameter als Überwachungsparameter in seinem zeitlichen Verlauf als Ist-Wert erfasst wird und mit dem für eine ordnungsgemäße Funktion in der Steuerung vorgegebenen zeitlichen Verlauf des Überwachungsparameters als Soll-Wert verglichen und bei einer Abweichung ein Stellsignal erzeugt wird.

Nachteilig bei dieser Realisierung ist ein aufwendiges Anpassen der elektrischen Steuerung an die jeweilige Schaltkennlinie des Aktuators.

In speicherprogrammierbaren Steuerungen werden viele unterschiedliche Aktuatoren verwendet oder gleiche Aktuatoren werden unter unterschiedlichen Bedingungen eingesetzt, so dass sich für jeden Aktuator eine andere Idealschaltkurve ergibt. In Systemen nach dem Stand der Technik erfolgt ein Vergleich von Soll- und Ist-Kurven immer im zentralen Steuersystem, so dass es einerseits erforderlich ist, viele unterschiedliche Daten zwischen Aktuator und zentralem Steuersystem zu übertragen, und andererseits muss dort jeder Aktuator unabhängig von den anderen überwacht werden.

Vor diesem Hintergrund ist es deshalb Aufgabe der Erfindung, ein System, eine Vorrichtung und ein Verfahren anzugeben, die ein Erkennen von Abweichungen vom normalen Schaltverhalten eines Aktuators auf einfache und flexible Art und Weise ermöglichen.

Diese Aufgabe wird durch die Merkmale des Patentanspruchs 1 gelöst.

Der Erfindung liegt der Gedanke zu Grunde, dass Aktuatoren im Neuzustand eine nahezu ideale Schaltkennlinie aufweisen. Durch häufiges Schalten oder Verschleiß ändert sich diese Schaltkennlinie. Die Erfindung sieht deshalb vor, Überwachungs- und Speichermittel anzuordnen, die die Schaltkennlinie des Aktuators im Neuzustand aufnehmen und nach einer festlegbaren Anzahl von Schaltungen die aktuelle Schaltkennlinie aufnehmen und mit der gespeicherten Schaltkennlinie im Neuzustand vergleichen.

Aktuatoren werden über Steuerschalter betätigt. Eine Zentraleinheit steuert eine Aktuatorsteuereinheit an, die zur Steuerung des Aktuators vorgesehen ist. Diese Aktuatorsteuereinheit umfasst einen Steuerschalter, der in Abhängigkeit von zugeführten Steuersignalen den Aktuator ein- bzw. ausschaltet. Weiter umfasst die Aktuatorsteuereinheit einen Prozessor zur Steuerung der Kommunikation zwischen einer Zentraleinheit und Aktuatorsteuereinheit und zur Steuerung des Schaltvorgangs des Steuerschalters und eine Überwachungseinheit zur Erfassung von schalterspezifischen Parameterwerten. Aus den schalterspezifischen Parameterwerten ergibt sich über die Zeit des Schaltvorgangs eine Schaltkennlinie.

Dazu ist in der Ansteuereinheit erfindungsgemäß eine Überwachungseinheit vorgesehen. Diese Überwachungseinheit umfasst Vorrichtungen zur Messung von schalterspezifischen Parametern, insbesondere von Strom- und/oder Spannungswerten über die Zeit des Schaltvorgangs. Mittels der Überwachungseinheit wird der während des Schaltvorgangs über den Steuerschalter fließende Strom bzw. die anliegende Spannung gemessen. Die von der Überwachungseinheit erfassten Messergebnisse werden dem Prozessor als Ist-Parameterwerte zugeführt. Im Prozessor wird in Abhängigkeit eines Vergleichs von Ist-Parameterwerten mit gespeicherten Referenzparameterwerten ein Signal erzeugt, welches zur Zuführung zur Steuereinheit vorgesehen ist. In der Aktuatorsteuereinheit ist vorteilhafterweise eine Speichervorrichtung zur Speicherung von Referenzparameterwerten angeordnet.

Es werden insbesondere zu einem festlegbaren Zeitpunkt, beispielsweise beim ersten Einschaltvorgang des Aktuators, die schalterspezifischen Parameter von der Überwachungseinheit erfasst und zum Prozessor übertragen und dort als Referenzparameterwerte gespeichert. Der Zeitpunkt kann auch von einem Benutzer festgelegt werden.

Es ist ebenso möglich, die Referenzparameterwerte über mehrere Schaltvorgänge zu erfassen und im Prozessor mittels einer Mittelwertbildung eine Referenzparameterkurve zu erzeugen.

Dies ermöglicht ein Anpassen der Überwachung an unterschiedliche Aktuatortypen und Einsatzbedingungen. Dadurch wird es ermöglicht, sowohl induktive als auch ohmsche oder kapazitive Lasten eines Aktuators zu kontrollieren. Jede Aktuatorsteuereinheit kann somit individuell programmiert werden. An die Zentraleinheit des Steuersystems wird nur Signal übermittelt, wenn ein Verschleiß vorliegt. Dadurch wird die Übertragung von einer Vielzahl von Daten reduziert.

Durch die erfindungsgemäße Ausgestaltung des Steuersystems wird ein Aktuator nur dann ausgewechselt, wenn aufgrund von Abweichungen zwischen Referenzparameterwerten und Ist-Parameterwerten ein Signal erzeugt wird, welches eine Abweichung anzeigt. Dadurch erübrigt sich das turnusmäßige Überprüfen aller Aktuatoren. Somit können Aktuatoren auch weit über eine ehemals festgelegte Schalthäufigkeit hinaus betrieben werden. Frühzeitige Totalausfälle dagegen werden ohne weiteres sofort erkannt.

Die Aufgabe wird auch durch eine Aktuatorsteuereinheit zur Ansteuerung eines Aktuators mit einem Steuerschalter gelöst, bei der ein Prozessor zur Steuerung der Kommunikation und des Schaltablaufs des Steuerschalters und eine Überwachungseinheit zur Erfassung von schalterspezifischen Parameterwerten angeordnet sind, wobei die Überwachungseinheit mit dem Prozessor gekoppelt ist und in dem Prozessor in Abhängigkeit eines Vergleichs von Ist-Parameterwerten mit gespeicherten Referenzparameterwerten ein Signal erzeugbar ist.

Die Aufgabe wird auch durch ein Verfahren zur Erzeugung eines verschleißabhängigen Signals eines Aktuators gelöst, bei dem während eines Schaltvorgangs die Strom- und/oder Spannungswerte eines Steuerschalters des Aktuators über die Zeit erfasst werden und die Strom- und/oder Spannungswerte einem in der Aktuatorsteuereinheit angeordneten Prozessor zur Verarbeitung zugeführt werden und im Prozessor diese Stromund/oder Spannungswerte mit Referenzstrom- und/oder Referenzspannungswerten verglichen werden und in Abhängigkeit eines Vergleichs ein Signal erzeugt wird, welches über eine Busankopplung an eine zentrale Steuereinheit geleitet wird.

Die Erfindung wird nachstehend ohne Beschränkung des allgemeinen Erfindungsgedankens anhand eines Ausführungsbeispiels unter Bezugnahme auf die Zeichnungen exemplarisch beschrieben.

Es zeigen:
- Figur 1: einen schematischen Aufbau eines Steuersystems,
- Figur 2: einen schematischen Aufbau einer Aktuatorsteuereinheit,
- Figur 3: einen Stromverlauf für das Einschalten eines Ventils und
- Figur 4: Beispielverläufe für abnormale Schaltvorgänge.

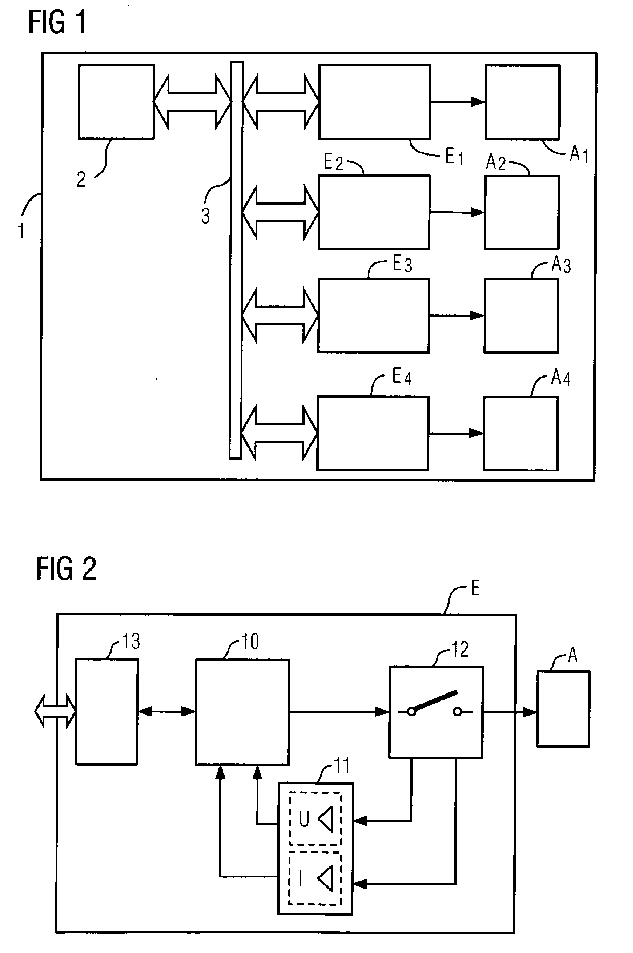

In Figur 1 ist ein erfindungsgemäßes Steuersystem 1 dargestellt. Dieses kann beispielsweise durch eine speicherprogrammierbare Steuerung (SPS) realisiert sein. Eine Zentraleinheit 2 ist über ein Bussystem 3 mit den Aktuatorsteuereinheiten E₁ - E₄ verbunden. Die Aktuatorsteuereinheiten E₁ - E₄ schalten die Aktuatoren A₁ - A₄ ein bzw. aus.

Figur 2 zeigt den Aufbau einer Aktuatorsteuereinheit E mit einem Steuerschalter 12, einer Überwachungseinheit 11 und einem Prozessor 10. Weiter ist ein Aktuator A dargestellt, der von dieser Aktuatorsteuereinheit E ein- bzw. ausgeschaltet wird. Über eine Busankopplungseinheit 13 wird eine standardisierte Schnittstelle zur Ankopplung an Bussysteme 3 ermöglicht.

Der Prozessor 10 ist vorteilhafterweise durch einen Signalprozessor realisiert, der die Kommunikation mit der übergeordneten Zentraleinheit 2 der SPS und außerdem die Schaltvorgänge des Steuerschalters 12 steuert. Da sowohl Magnetventile als auch Schütze aufgrund ihrer stark unterschiedlichen Bauform keine verallgemeinerbaren Schaltkennlinien aufweisen, ist vor der eigentlichen Auswertung ein "teach in" oder Lern-Zyklus erforderlich. Dazu werden beim Einschalten oder per Anwenderbefehl gesteuert über mehrere reguläre Schaltvorgänge Schaltkennlinien erfasst und gespeichert. Aus der sich ergebenden Kennlinienschar wird im einfachsten Fall durch Mittelwertbildung die für diesen Aktuator typische Referenzkennlinie ermittelt und gespeichert.

Die im Normalbetrieb des Aktuators bei jedem Schaltvorgang weiterhin aufgenommenen Ist-Parameterwerte der Zeitfunktion des Stromes bzw. der Spannung werden im Signalprozessor laufend mit der gespeicherten Referenzkennlinie verglichen. Abweichungen von der Referenzkennlinie über ein festlegbares Maß hinaus werden als Indikator für Unstimmigkeiten des Aktuatorbetriebes gewertet und an die Zentraleinheit der SPS gemeldet. Dabei nimmt der Aktuator weiter seine Schaltfunktion wahr. Die Konsequenz aus dieser Meldung wird beispielsweise von einem Anwenderprogramm in der Zentraleinheit gezogen, indem beispielsweise der Prozess, in dem sich der Aktuator befindet, in einem Wartungsmodus gefahren wird. Die Meldung kann auch einem Bediener angezeigt werden.

Die Schaltkennlinien weisen beispielsweise beim Einschalten eines induktiven Aktuators eine e-Funktion des Stromes auf. Ist die Kennlinie flacher als die gespeicherte Referenzkennlinie, kann beispielsweise von einer schleichenden Erhöhung der Kontaktwiderstände ausgegangen werden. Ist sie dagegen steiler, so deutet dies auf einen schwer gängigen Anker hin, vielleicht infolge von Korrosion. In beiden Fällen ist ein Überprüfen des Aktuators auch dann sinnvoll, wenn dieser augenscheinlich noch störungsfrei schaltet.

Aufgrund der Lernphase für die Referenzkennlinien ist ein erfindungsgemäßes Steuersystem auch in der Lage, Aktuatortypen zu überwachen, die keine induktiven Lasten aufweisen. Es kann dadurch ebenso auch für rein ohmsche oder motorische oder kapazitive Lasten eingesetzt werden.

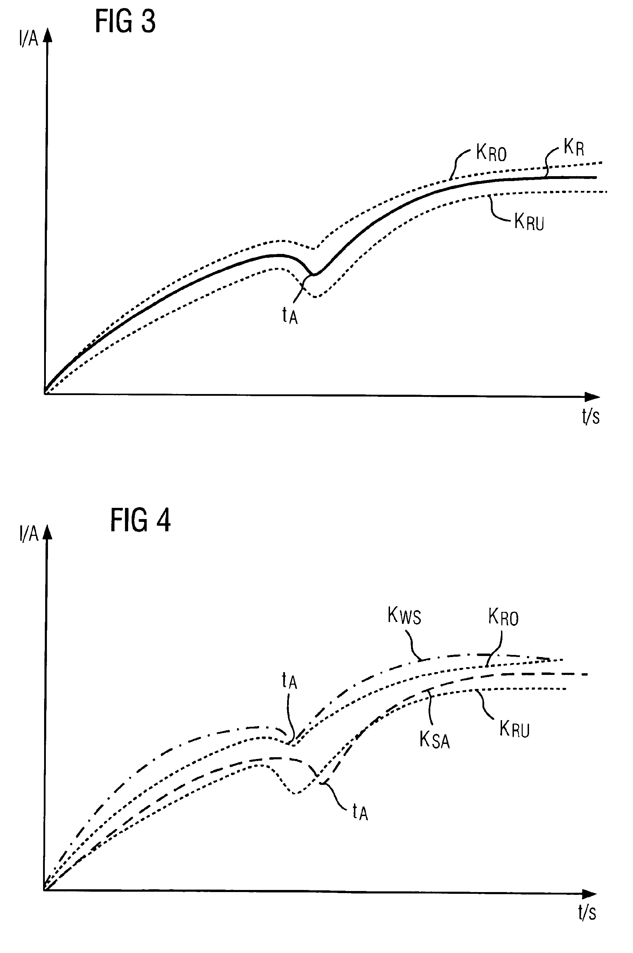

Figur 3 zeigt eine typische Stromverlaufskennlinie K_{R}, wie sie beim Einschalten beispielsweise eines Ventils auftritt.

Es sind auch die Toleranzgrenzen K_{RO} und K_{RU} dargestellt, innerhalb derer von einem ordnungsgemäßen schaltenden Ventil ausgegangen werden kann. Liegen die gemessenen Ist-Parameterwerte, in diesem Fall die Stromwerte, außerhalb des Toleranzbereichs, liegt wahrscheinlich eine Störung vor. Mit t_{A} ist der Schaltzeitpunkt des Ankers bezeichnet.

Figur 4 zeigt zwei abnormale Schaltvorgänge, Fehlerkennlinie K_{ws} zeigt einen beginnenden Windungsschluss und Fehlerkennlinie K_{SA} zeigt einen schwer gängigen Anker. Die erfassten Parameterwerte liegen wenigstens teilweise außerhalb des Toleranzbereichs K_{RO} und K_{RU}, wodurch eine ausreichend hohe Wahrscheinlichkeit gegeben ist, dass der Aktuator demnächst ausfallen wird.

## Patentansprüche

1. Steuersystem (1) mit einer Zentraleinheit (2) und wenigstens einer Aktuatorsteuereinheit (E_{N}), die zwischen die Zentraleinheit (2) des Steuersystems (1) und wenigstens einen zu steuernden Aktuator (A_{N}) geschaltet ist, wobei die Aktuatorsteuereinheit (E_{N}) einen Steuerschalter (12) zum Ansteuern des Aktuators (A_{N}) umfasst, **dadurch gekennzeichnet, dass**
ein Prozessor (10) zur Steuerung der Kommunikation zwischen Zentraleinheit (2) und Aktuatorsteuereinheit (E_{N}) und des Schaltvorgangs des Steuerschalters (12) und eine mit dem Prozessor (10) gekoppelte Überwachungseinheit (11) zur Erfassung von schalterspezifischen Parameterwerten (I (t), U(t)) angeordnet sind, wobei in Abhängigkeit eines Vergleichs von Ist-Parameterwerten (I_{A}(t), U_{A}(t)) mit gespeicherten Referenzparameterwerten (Iₛ(t), Uₛ(t)) ein Signal erzeugbar ist, welches zur Zuführung zur Zentraleinheit (2) vorgesehen ist.

2. Steuersystem nach Anspruch 1, **dadurch gekennzeichnet, dass** in der Aktuatorsteuereinheit (E_{N}) eine Speichervorrichtung zur Speicherung von Referenzparameterwerten (Iₛ(t), Uₛ(t)) angeordnet ist.

3. Steuersystem nach Anspruch 1, **dadurch gekennzeichnet, dass** der Prozessor (10) und die Überwachungseinheit (11) in der Aktuatorsteuereinheit (E_{N}) angeordnet sind.

4. Steuersystem nach Anspruch 1, **dadurch gekennzeichnet, dass** während eines festlegbaren Zustandes des Aktuators oder während eines festlegbaren Zeitraumes die Referenzparameterwerte (Iₛ(t), Uₛ(t)) erfassbar und speicherbar sind.

5. Steuersystem nach Anspruch 1, **dadurch gekennzeichnet, dass** die Überwachungseinheit (11) im Ein- und/oder Ausschaltmoment des Aktuators (A_{N}) eine Strom- und/oder Spannungsfunktion (I (t), U(t)) als schalterspezifische Parameter erfasst und dem Prozessor (10) zum Vergleich mit den Referenzparameterwerten (Iₛ(t), Uₛ(t)) zuführt.

6. Steuersystem nach Anspruch 1, dadurch h gekennzeichnet, dass aus Parameterwerten (I(t), U(t)) mehrerer Schaltabläufe die Referenzparameterwerte (Iₛ(t), Uₛ(t)) erzeugbar sind.

7. Steuersystem nach Anspruch 1, **dadurch gekennzeichnet, dass** ein Signal in Abhängigkeit von bestimmbaren Toleranzen (K_{RO}, K_{RU}) erzeugbar ist.

8. Aktuatorsteuereinheit (E_{N}) zur Ansteuerung eines Aktuators (A_{N}) mit einem Steuerschalter (12) zum Ansteuern des Aktuators (A_{N}), **dadurch gekennzeichnet, dass** ein Prozessor (10) zur Steuerung der Kommunikation und des Schaltvorgangs des Steuerschalters (12) und eine Überwachungseinheit (11) zur Erfassung von schalterspezifischen Parameterwerten (I(t), U(t)) angeordnet sind, wobei die Überwachungseinheit (11) mit dem Prozessor (10) gekoppelt ist und in dem Prozessor (10) in Abhängigkeit eines Vergleichs von Ist-Parameterwerten (I_{A}(t), U_{A}(t)) mit gespeicherten Referenzparameterwerten (Iₛ(t), Uₛ(t)) ein Signal erzeugbar ist.

9. Verfahren zur Erzeugung eines verschleißabhängigen Signals eines Aktuators (A_{N}), bei dem während eines Schaltvorgangs die Strom- und/oder Spannungswerte (I(t), U(t)) eines Steuerschalters (12) des Aktuators (A_{N}) über die Zeit (t) erfasst werden,
**dadurch gekennzeichnet, dass**
diese Strom- und/oder Spannungswerte (I(t), U(t)) einem in einer Aktuatorsteuereinheit (E_{N}) angeordneten Prozessor (10) zur Verarbeitung zugeführt werden und im Prozessor (10) Ist-Strom- und/oder -Spannungswerte (I_{A}(t), U_{A}(t)) mit Referenzstrom- und/oder Referenzspannungswerten (Iₛ(t), Uₛ(t)) verglichen werden und in Abhängigkeit eines Vergleichs ein Signal erzeugt wird, welches über eine Busankopplung (13) an eine Zentraleinheit (2) geleitet wird.
